# EUROPÄISCHE PATENTSCHRIFT

(11) **EP 1 399 684 B1**
(45) Veröffentlichungstag und Bekanntmachung des Hinweises auf die Patenterteilung: **07.09.2005**
(21) Anmeldenummer: 02747413.9
(22) Anmeldetag: 19.06.2002
(51) Int. Cl.: F16H 61/04

(54) **REDUZIERUNG DER THERMISCHEN BELASTUNG VON ANFAHRSCHALTELEMENTEN BEI AUTOMATGETRIEBEN ODER AUTOMATISIERTEN HANDSCHALTGETRIEBEN**
REDUCTION OF THE THERMAL STRESS OF STARTING SWITCH ELEMENTS IN AUTOMATIC GEARBOXES OR IN AUTOMATED MANUAL GEARBOXES
REDUCTION DE LA SOLLICITATION THERMIQUE D'ELEMENTS DE COMMANDE DE DEMARRAGE DANS DES BOITES DE VITESSES AUTOMATIQUES OU DES BOITES DE VITESSES A COMMANDE MANUELLE AUTOMATISEES

(30) Priorität: 23.06.2001 DE 10130390
(43) Veröffentlichungstag der Anmeldung: 24.03.2004
(73) Patentinhaber: ZF FRIEDRICHSHAFEN Aktiengesellschaft, 88038 Friedrichshafen (DE)
(72) Erfinder: GIERER, Georg, 88079 Kressbronn (DE); HAUPT, Josef, 88069 Tettnang (DE); POPP, Christian, 88079 Kressbronn (DE); STEINHAUSER, Klaus, 88079 Kressbronn (DE); SCHIELE, Peter, 88079 Kressbronn (DE)
(86) Internationale Anmeldenummer: PCT/EP2002/006757
(87) Internationale Veröffentlichungsnummer: WO 2003/001088

(56) Entgegenhaltungen:
- EP-B- 0 890 045
- DE-A- 19 600 739
- DE-A- 19 921 920
- DE-C- 19 946 438

## Beschreibung

Die vorliegende Erfindung betrifft ein Verfahren zur Reduzierung der thermischen Belastung von Anfahrschaltelementen bei Automatgetrieben oder automatisierten Handschaltgetrieben für ein Kraftfahrzeug gemäß dem Oberbegriff des Patentanspruchs 1.

Bei Automatgetrieben oder automatisierten Handschaltgetrieben mit nasser oder trockener Anfahrkupplung besteht das Problem, dass bei einer thermischen Überlastung der Anfahrkupplung aufgrund des Schlupfbetriebs die Kupplung geschädigt oder zerstört werden kann.

Das in einer derartigen Situation unvermeidbare Öffnen der Kupplung führt dazu, daß kein Kraftfluss zur Antriebsachse möglich ist, was zur Folge hat, dass sich das Fahrzeug im Stillstand befindet und somit nicht mehr bewegt werden kann. Eine Weiterfahrt ist erst dann möglich, wenn sich die Kupplung wieder abgekühlt hat.

Wenn zudem das Schaltelement durch Überlast geschädigt ist, ist eine Weiterfahrt in den meisten Fällen nicht mehr möglich.

Üblicherweise sind Anfahrschaltelemente auf das maximale Anfahrmoment ausgelegt. Beispielsweise existieren Automatgetriebe mit integrierter nasser Vorwärtsgang-Kupplung und integrierter nasser Rückwärtsgang-Bremse. Bei diesen bekannten Getrieben müssen Vorwärtsgang-Kupplung und R-Gang-Bremse bezüglich der thermischen Belastbarkeit so ausgelegt werden, dass sie jeweils 100 % der Anfahr-Schlupfleistung ertragen können, was in großen, schweren und teuren Kupplungen resultiert und in einer Reduzierung des Fahrerkomforts, wenn beispielsweise im unteren Lastbereich angefahren wird, da die Anfahrkupplungen nicht "feinfühlig" genug ausgelegt sind, um ein komfortables Anfahren zu gewährleisten. Bei schwächer dimensionierten Kupplungen ist wiederum eine Reduzierung des Motormoments zwangsläufig erforderlich, was aber auch vom Fahrer als unangenehm empfunden werden könnte.

Aus der EP 0 890 045 B1 der Anmelderin ist ein Verfahren zum Steuern eines Wendegetriebes für Arbeitsmaschinen zur Reduzierung der erhöhten thermischen Belastung von Schaltelementen beim Reversieren bekannt. Im Rahmen dieser Patentschrift wird ein Teil der Schlupfleistung von einer zusätzlichen Kupplung übernommen.

Aus der DE 196 00 739 A1 der Anmelderin ist eine Getriebesteuerung zur Reduzierung der thermischen Belastung von Schaltelementen in einem Getriebe bekannt, bei der beim Anfahren neben einem ersten im Kraftfluß befindlichen Schaltelement mindestens ein zweites im Kraftfluß befindliches Schaltelement derart eingesetzt wird, dass das zweite Schaltelement zumindest einen Teil der beim Anfahren insgesamt zu übertragenen Schlupfleistung übernimmt. Dabei wird diese Schlupfleistung seitlich sequentiell oder zeitlich parallel aufgeteilt, wobei die Aufteilung entsprechend der individuellen Kupplungsbelastbarkeit stufenlos steuerbar ist.

Der vorliegenden Erfindung liegt die Aufgabe zugrunde, ein Verfahren zur Reduzierung der thermischen Belastung von Anfahrschaltelementen bei Automatgetrieben oder automatisierten Handschaltgetrieben anzugeben, welches unter Nutzung der ohnehin vorhandenen Schaltelemente die thermische Überbelastung der Schaltelemente möglichst vermeidet. Beim Erreichen der Überlastgrenze einer Anfahrkupplung soll eine Weiterfahrt ermöglicht bzw. ein Liegenbleiben des Fahrzeugs vermieden werden.

Des weiteren soll das Anfahren im unteren Bereich möglichst komfortabel gestaltet werden.

Ein weiteres Ziel des Verfahrens besteht darin, dem Fahrer bei Vollastanfahrten ausreichend Anfahrbeschleunigung zur Verfügung zu stellen.

Demnach wird vorgeschlagen, beim Anfahren mehrere Schaltelemente einzusetzen. Dies erfordert keine zusätzlichen Schaltelemente, da bei Automatgetrieben der neueren Generation in einem Gang zwei oder mehr Kupplungen und/oder Bremsen in den Kraftfluss eingebunden sind.

Im Rahmen der Erfindung ist vorgesehen, dass wenn festgestellt wird, dass ein Schaltelement seine thermische Belastungsgrenze erreicht hat, dieses Schaltelement solange nicht mehr zum Anfahren (Schlupfbetrieb) einzusetzen, bis es wieder ausreichend abgekühlt ist.

Um ein Anfahren weiterhin zu ermöglichen, wird diese Aufgabe von dem weiteren Schaltelement, das im Kraftfluss liegt, übernommen. Sind mehr als zwei Schaltelemente in den Kraftfluss eingebunden, so kann diese Ersatzstrategie auf diese weiteren Schaltelemente ausgedehnt werden.

Voraussetzung dafür ist eine Überwachungsfunktion, die beispielsweise über ein Wärmemodell oder eine direkte Wärmemessung an den Schaltelementen die thermische Beanspruchung der Schaltelemente kontrolliert.

Im Rahmen einer Variante des erfindungsgemäßen Verfahrens wird vorgeschlagen, in einen anderen Gang zu wechseln, wenn ein Schaltelement seine thermische Belastungsgrenze erreicht hat, um die in dem anderen Gang im Kraftfluss liegenden Schaltelemente als schlupfende Anfahrelemente einzusetzen.

Tritt die Überlastung eines Schaltelementes während des Anfahrvorgangs, also während des Schlupfbetriebs der Kupplung oder Bremse auf, so wird durch einen geschickten Wechsel der Schaltelemente von dem einen auf das andere Schaltelement gewechselt.

Eine weitere vorteilhafte Ausgestaltung sieht vor, die Schlupfleistung auf zwei Schaltelemente parallel aufzuteilen.

Hierbei wird durch Verwendung eines Sensors und insbesondere eines Koppelwellen-Sensors das System strategiefähig, derart, dass die Aufteilung der Schlupfleistung auf die beteiligten Schaltelemente stufenlos steuerbar ist. Besonders vorteilhaft für die konstruktive Auslegung der Schaltelemente ist eine Aufteilung der Schlupfleistung auf eine Kupplung und eine Bremse. Im Rahmen dieser Variante braucht beispielsweise lediglich die Bremskupplung thermisch als Anfahrkupplung ausgelegt werden, mit dem Vorteil, dass die parallel zur Bremse drehmomentführenden Kupplungen thermisch nicht stärker ausgelegt werden als eine normale Schaltkupplung. Der Koppelsensor lässt sich auch problemlos in ein Mechatronik-Modul integrieren.

Durch die vorgeschlagene Aufteilung der Reibleistung auf zwei Schaltelemente können diese jeweils schwächer ausgelegt werden, wodurch erheblich weniger Bauraum beansprucht und das Getriebegewicht gesenkt wird.

Gegenüber dem üblichen Einzelkupplungskonzept als Anfahrschaltelement weist die hier vorgestellte Vorgehensweise zudem eine erweiterte Strategiefähigkeit auf.

Im folgenden wird die Erfindung anhand der beigefügten Zeichnung näher erläutert.
In dieser stellen dar:
- Fig. 1: ein Drehzahl-Zeit-Diagramm eines Anfahrvorgangs gemäß der vorliegenden Erfindung;
- Fig. 2: eine schematische Darstellung der Kupplungsund Sensoranordnung am Beispiel eines Automatgetriebes;
- Fig. 3: ein Kraftflussschema des Automatgetriebes aus Fig. 2 im ersten Vorwärtsgang und
- Fig. 4: ein Kraftflussschema des Automatgetriebes aus Fig. 2 im Rückwärtsgang.

Gemäß der ersten Variante der Erfindung ist nun vorgesehen, bei thermischer Überlastung der "normalen" Anfahrkupplung die zweite im Kraftfluss liegende Kupplung durch Absenken des Druckes ebenfalls in die Schlupfphase zu bringen. Die erste Kupplung wird anschließend geschlossen, so dass die zweite Kupplung den Anfahrvorgang übernimmt. Ein typischer Fall für eine derartige Situation ist beispielsweise bei Hochlastanfahrten gegeben.

Eine solche Vorgehensweise ist gemäß der Erfindung auch dann vorgesehen, wenn die "normale" Anfahrkupplung für ein "feinfühliges" Anfahren ausgelegt ist. Die zweite Kupplung wird in ihrem Druck auf einen bestimmten Druckwert eingestellt. Wenn das Moment an der ersten Kupplung einen bestimmten wert übersteigt, kommt automatisch die zweite Kupplung in den Schlupf. Die erste Kupplung wird geschlossen, und die zweite Kupplung übernimmt den Anfahrvorgang.

Im allgemeinen erfolgt gemäß der Erfindung bei drehmomentmäßig unterschiedlich ausgelegten Kupplungen das "normale" Anfahren über eine Regelung und/oder Steuerung der drehmomentschwächeren Kupplung bei gleichzeitig geschlossener drehmomentstärkeren Kupplung, wohingegen die Hochlastanfahrten über eine Regelung und/oder Steuerung der drehmomentstärkeren Kupplung erfolgen.

In diesem Zusammenhang erweist sich ein Drehzahlsensor, der die Drehzahl zwischen den beiden Kupplungen an einer geeigneten Stele erfasst, als besonders vorteilhaft.

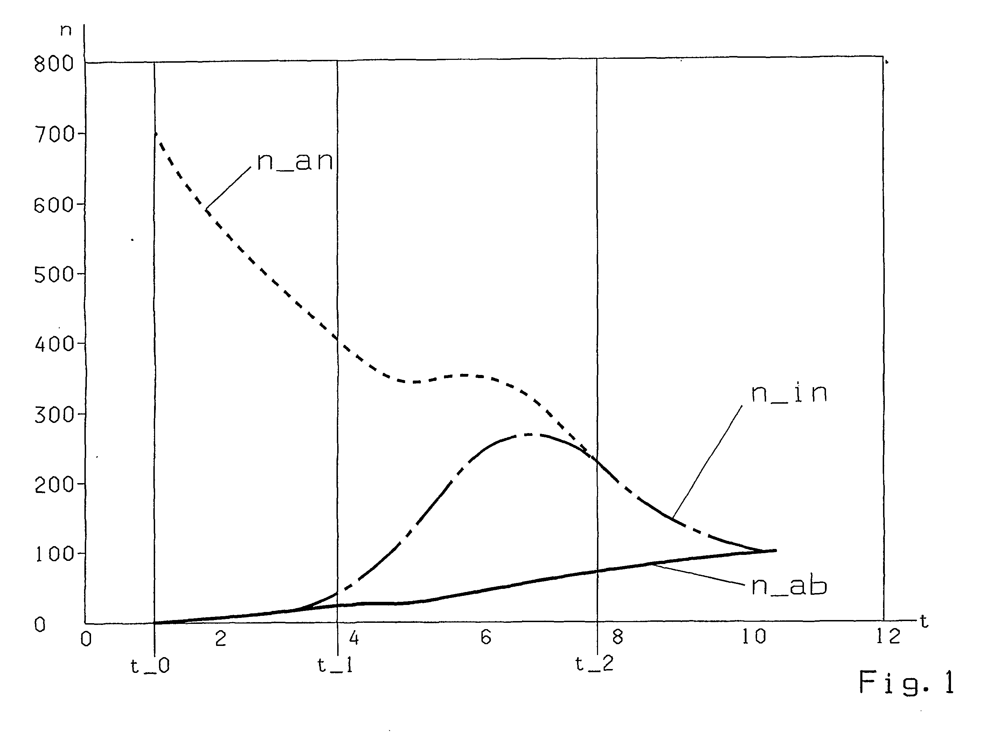

In Fig. 1 wird ein Drehzahl-Zeit-Diagramm eines Anfahrvorgangs gezeigt, ohne Berücksichtigung einer eventuellen Gangschaltung im Verlauf dieses Anfahrvorgangs und ohne eine Gaspedaländerung durch den Fahrer im Verlauf dieses Anfahrvorgangs. Zu Beginn des Anfahrvorgangs (Zeitpunkt t_0 ist die Abtriebsdrehzahl n_ab, dargestellt durch die durchgezogene Kurve, Null, während die Antriebsdrehzahl n_an (gestrichelte Kurve) einen hohen Wert aufweist. Zum Zeitpunkt t_1 übernimmt gemäß der Erfindung auch das zweite Anfahrschaltelement Schlupfleistung, während das erste Schaltelement schnell geschlossen wird, so dass zu einem späteren Zeitpunkt t_2 die Differenzdrehzahl n_in zwischen den beiden Schaltelementen (strichpunktierte Kurve) gleich der Antriebsdrehzahl n_an ist.

Diese Ersatzfunktionalitäten können gemäß der Erfindung auch dazu verwendet werden, um bei erkannter Schädigung einer Kupplung über eine entsprechende Diagnosefunktionalität diese Kupplung als Anfahrelement nicht mehr einzusetzen und damit zu schonen.

Beim normalen Anfahrvorgang übernimmt die "normale" Kupplung das Anfahren, während die zweite Kupplung geschlossen bleibt.

Während im Rahmen der bereits erläuterten Variante des Verfahrens die Schaltelemente abwechselnd die Schlupfleistung übernehmen, sieht eine weitere Variante vor, dass die Schlupfleistung auf mindestens zwei Kupplungen aufgeteilt werden kann.

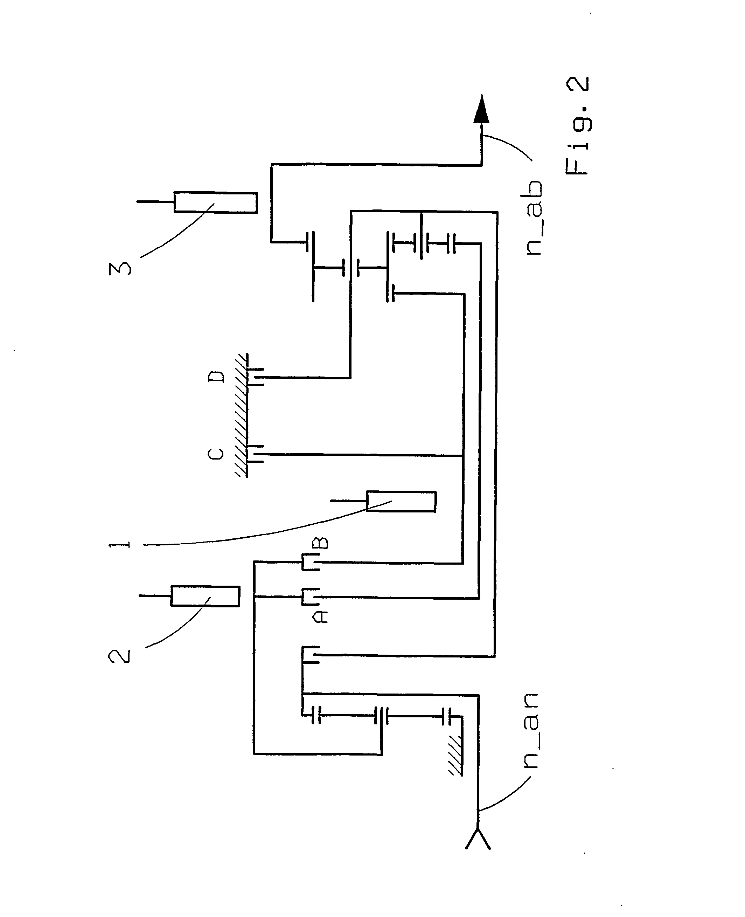

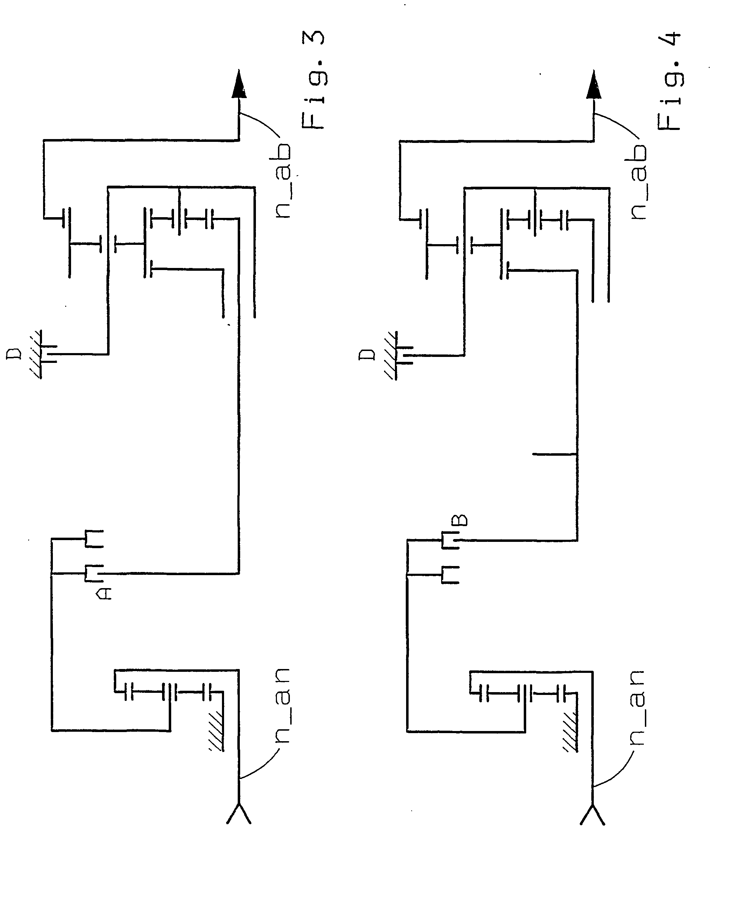

Der schematische Aufbau eines beispielhaften Automatgetriebes ist in Fig. 2 dargestellt. Fig. 3 zeigt den Kraftfluß im ersten Vorwärtsgang und Fig. 4 den Kraftfluß im Rückwärtsgang, wobei jeweils zwei Schaltelemente im Kraftfluß sind.

Bei einer parallelen Drehmomentübertragung beim Anfahren über beide im Kraftfluß befindlichen Schaltelemente kann beispielsweise bei einer Vorwärtsanfahrt im ersten Gang die Vorwärtskupplung A und die Bremse D und bei einer Rückwärtsanfahrt die Rückwärtskupplung B und die Bremse D jeweils die halbe Anfahr-Schlupfleistung übertragen.

Durch Verwendung eines Sensors und insbesondere eines Koppelwellen-Sensors 1 in Kombination mit den bereits vorhandenen Sensoren 2, 3 für Antriebsdrehzahl n_an bzw. Abtriebsdrehzahl n_ab wird das System strategiefähig.

Dies bedeutet, dass im vorliegenden Fall die Aufteilung der Schlupfleistung auf Kupplung und Bremse stufenlos steuerbar ist, wobei sich der Koppelsensor problemlos in das Mechatronik-Modul integrieren lässt.

Diese Variante weist den Vorteil auf, dass nur die Bremse D thermisch als Anfahrkupplung ausgelegt wird, während die Vorwärts- und Rückwärtskupplungen A und B thermisch nicht stärker ausgelegt zu werden brauchen als normale Schaltkupplungen.

Es ist auch möglich, dass an der Kupplung nur geringe Schlupfleistung erzeugt wird und dass an der Bremse der überwiegende Anteil der Schlupfleistung erzeugt wird und umgekehrt. Demnach wird bei geschlossener Bremse mit der Kupplung für eine kurze Zeit angefahren; anschließend übernimmt die Bremse oder eine weitere Kupplung den restlichen Anfahrvorgang und somit den überwiegenden Anteil der Reibenergie.

### Bezugszeichen

- 1: Koppelwellen-Sensor
- 2: Sensor für die Antriebsdrehzahl
- 3: Sensor für die Abtriebsdrehzahl

- n_an: Antriebsdrehzahl
- n_ab: Abtriebsdrehzahl
- n_in: Drehzahl zwischen den beiden Kupplungen
- A: Vorwärts-Kupplung
- B: Rückwärts-Kupplung
- C, D: Bremsen

## Patentansprüche

1. Verfahren zur Reduzierung der thermischen Belastung von Anfahrschaltelementen bei Automatgetrieben oder automatisierten Handschaltgetrieben mit mindestens zwei Schaltelementen im Kraftfluss, wobei beim Anfahren neben einem ersten Schaltelement mindestens ein zweites im Kraftfluß befindliches Schaltelement eingesetzt wird, welches zumindest einen Teil der Schlupfleistung übernimmt, wobei die Schlupfleistung zeitlich sequentiell oder zeitlich parallel stufenlos aufteilbar ist, **dadurch gekennzeich- net,** dass eine Überwachungsfunktion vorgesehen ist, die die thermische Beanspruchung der Schaltelemente kontrolliert.

2. Verfahren nach Anspruch 1, **dadurch gekenn- zeichnet**, dass die Überwachungsfunktion ein Wärmemodell der Schaltelemente aufweist und/oder Signale mindestens eines Überwachungssensors, insbesondere eines Temperatursensors, an den Schaltelementen verarbeitet.

3. Verfahren nach Anspruch 1 oder 2, **dadurch ge- kennzeichnet,** dass bei thermischer Überlastung des "normalen" Schaltelementes das zweite im Kraftfluss liegende Schaltelement durch Absenken des Druckes ebenfalls in die Schlupfphase gebracht wird, wobei das erste Schaltelement anschließend schnell geschlossen wird, so dass das zweite Schaltelement den Anfahrvorgang übernimmt.

4. Verfahren nach Anspruch 1, 2 oder 3, **dadurch gekennzeichnet, dass** in einen anderen Gang gewechselt wird, wenn ein Schaltelement seine thermische Belastungsgrenze erreicht hat, um die in dem anderen Gang im Kraftfluss liegenden Schaltelemente als schlupfende Anfahrelemente einzusetzen.

5. Verfahren nach einem der Ansprüche 1 bis 4, **dadurch gekennzeichnet, dass** bei erkannter Schädigung eines Schaltelementes dieses Schaltelement nicht mehr als Anfahrelement eingesetzt wird.

6. Verfahren nach einem der Ansprüche 1 bis 5, **dadurch gekennzeichnet, dass** bei drehmomentmäßig unterschiedlich ausgelegten Schaltelementen das "normale" Anfahren über eine Steuerung und/oder Regelung des drehmomentschwächeren Schaltelementes bei gleichzeitig geschlossenem drehmomentstärkeren Schaltelement erfolgt, wohingegen die Hochlastanfahrten über eine Steuerung und/oder Regelung des drehmomentstärkeren Schaltelementes erfolgen.

7. Verfahren nach einem der Ansprüche 1 bis 6, **dadurch gekennzeichnet, dass** zur Aufteilung der Schlupfleistung ein Koppelwellen-Sensor (1) vorgesehen ist.

8. Verfahren nach Anspruch 7, **dadurch gekenn- zeichnet,** dass der Koppelwellen-Sensor (1) in ein Mechatronik-Modul integrierbar ist.

## Claims

1. The invention relates to a method for reducing the thermal load on starting components of automatic transmissions or automated manual transmissions featuring at least two shifting components in the power flow, with starting involving - in addition to a first shifting component - use of at least a second power-flow-integrated shifting component, which performs at least part of the slip, with slip performance being infinitely splittable in terms of sequential or parallel chronology, **characterized in that** a monitoring function is provided to monitor the thermal load on the shifting components.

2. A method according to claim 1, **characterized in that** the monitoring function features a thermal model of the shifting components and/or processes signals of at least one monitoring sensor, especially of a thermal sensor, on the shifting components.

3. A method according to claim 1 or 2, **characterized in that** in the event of thermal overloading of the "normal" shifting component, lowering of the pressure causes the second power-flow-integrated shifting component also to slip, with the first shifting component being promptly closed, so that the starting process is performed by the second shifting component.

4. A method according to claim 1, 2 or 3, **characterized in that** shifting to another gear takes place when a shifting component reaches its loading limit, so that the power-flow-integrated shifting components of the other gear function as slipping starting components.

5. A method according to one of the claims 1 through 4, **characterized in that** when damage to a shifting component is detected, the damaged shifting component is no longer employed as starting element.

6. A method according to one of the claims 1 through 5, **characterized in that** with torque-divergent shifting components, "normal" starting takes place via control of the lower-torque shifting component while the higher-torque shifting component is closed, whereas high-load starting takes place via control of the higher-torque shifting component.

7. A method according to one of the claims 1 through 6, **characterized in that** a coupling-shaft sensor (1) is provided for the distribution of slip performance.

8. A method according to claim 7, **characterized in that** the coupling-shaft sensor (1) can be integrated into a mechatronic module.

## Revendications

1. Méthode de réduction de la sollicitation thermique d'éléments de commande de démarrage de transmissions automatiques ou boîtes de vitesses mécaniques automatisées avec au moins deux éléments de commande dans la chaîne cinématique, sachant qu'en phase de démarrage est utilisé, outre un premier élément de commande au moins un deuxième élément de commande se trouvant dans la chaîne cinématique, ce dernier s'assumant au moins une partie de la puissance de patinage, et sachant que la puissance de patinage peut être répartie dans le temps en continue et de manière séquentielle ou temporelle sur deux branches parallèles, **caractérisée en ce qu'**il est prévu une fonction de surveillance pour contrôler la sollicitation thermique des éléments de commande.

2. Méthode selon la revendication 1, **caractérisée en ce que** la fonction de surveillance comporte un modèle thermique des éléments de commande et/ou élabore des signaux d'au moins un capteur de surveillance, en particulier d'un capteur de température, au niveau des éléments de commande.

3. Méthode selon la revendication 1 ou 2, **caractérisée en ce que** en cas d'une surcharge thermique au niveau de l'élément de commande « normal », le deuxième élément de commande se trouvant dans la chaîne cinématique est également amené à la phase de patinage en réduisant la pression, sachant que le premier élément de commande est ensuite rapidement fermé, de manière à ce que le deuxième élément de commande prend en charge le démarrage.

4. Méthode selon la revendication 1, 2 ou 3, **caractérisée en ce que** le système engage un autre rapport dés qu'un élément de commande atteint son limite de sollicitation thermique, afin de pouvoir utiliser les autres éléments de commande se trouvant dans la chaîne cinématique dans l'autre rapport en tant qu'éléments de démarrage qui peuvent glisser.

5. Méthode selon une des revendications 1 à 4, **caractérisée en ce que** en cas de détection d'une détérioration d'un élément de commande, celui-ci n'est plus utilisé en tant qu'élément de démarrage.

6. Méthode selon une des revendications 1 à 5, **caractérisée en ce que** en cas d'éléments de commande d'une conception différente en termes de couples, le démarrage « normal » est effectué à l'aide d'une commande et/ou d'un réglage de l'élément de commande à couple plus faible, l'élément de couple à couple plus élevé étant parallèlement fermé, tandis que les démarrages à charge élevée s'effectuent par la commande et/ou le réglage de l'élément de commande à couple plus élevé.

7. Méthode selon une des revendications 1 à 6, **caractérisée en ce que** pour la répartition de la puissance de patinage est prévu un capteur d'ondes (1).

8. Méthode selon la revendication 7, **caractérisée en ce que** le capteur d'ondes (1) peut être intégré dans un module mécatronique.
